# EUROPEAN PATENT APPLICATION

(11) **EP 1 127 816 A2**
(43) Date of publication of application: **29.08.2001**
(21) Application number: 01830123.4
(22) Date of filing: 22.02.2001
(51) Int. Cl.: B65G 69/16

(54) **a Method and apparatus for unloading fragile products**

(30) Priority: 25.02.2000 IT BO000092
(71) Applicant: Zanchetta & C. S.r.l., 55015 Montecarlo (Lucca) (IT)
(72) Inventor: Papera, Carlo, 55018 Segromigno Monte (Lucca) (IT)
(74) Representative: Lanzoni, Luciano

(57) **Abstract**

In a method and apparatus for unloading fragile products from a storage container (2), comprising a step of transferring the products by gravity from a container (2) to an unloading station (S) below along a given, straight unloading path (P), a product interception device (22), with a given linear movement along the unloading path (P), intercepts the products and accompanies them at a first given speed to the unloading station (S), until a continuous column of products is formed, substantially extending between the container (2) and the unloading station (S); then, during product unloading, the column is gradually shortened by raising the unloading station (S) at a second given speed.

## Description

The present invention relates to a method and apparatus for unloading fragile products.

The present invention is particularly advantageous when applied in industries in the pharmaceuticals sector, or more generally in the chemical sector, in which particularly delicate products such as tablets, capsules or similar products must be unloaded from a storage hopper container.

The description below refers, without limiting the scope of application, to equipment for the pharmaceutical sector, in which the above-mentioned products arrive from tabletting machines, capsule filling machines or coaters.

In the known type of apparatus, the above-mentioned storage hopper container is emptied through a lower outfeed opening, from which the products in the container are transferred to an unloading station connected to a lower collection tank which, in turn, may be connected, for example, to a packaging machine for such products.

In such apparatus, the unloading station is normally located below the above-mentioned lower outfeed opening, to which it is connected by a rigid cylindrical pipe positioned vertically under the container. In this way, the container is emptied by gravity, with evident advantages in terms of system simplicity and costs.

However, in an apparatus of the type described above, the products may suffer more or less serious damage when free falling under gravity from the container to the collection tank.

A first cause of this disadvantage derives from the need to allow complete filling of the collection tank, meaning that the unloading station, consisting of a lower outfeed opening in the above-mentioned cylindrical pipe, must be separated from the base of the collection tank by a distance which is at least equal to the height of the tank.

A second cause is the fact that the above-mentioned cylindrical pipe is normally quite long (around two or three metres), since the container and the collection tank are usually located on two adjacent storeys in an industrial building.

The information above makes it evident that the drop to which the products are subjected as they free fall under gravity from the upper container to the lower tank, is normally quite considerable and, in some cases, for fragile products, may give rise to a speed and impact energy against the base of the tank such that the products are seriously damaged.

In particular, in the case of capsules, impact of the latter against the base of the collection tank may ruin the capsules.

In contrast, tablets may be chipped, resulting not only in the above-mentioned tank contamination risks, but also an unwanted reduction in the medicinal dose in the tablets, with obvious consequences in terms of therapeutic effectiveness. Obviously, such disadvantages may also affect coated products.

The aim of the present invention is to overcome the above-mentioned disadvantage.

Accordingly, the present invention provides a method for unloading fragile products, the method comprising a step of transferring the products along a given unloading path, from a storage container to an unloading station located below the storage container. The method is characterised in that it comprises at least an initial transfer step during which the products are intercepted along the path and accompanied with a given law of motion and at a given first speed to the unloading station, until a continuous column of products is formed, substantially extending between the storage container and the unloading station.

The present invention also relates to an apparatus for unloading fragile products.

Accordingly, the present invention provides an apparatus for unloading fragile products, the apparatus comprising a storage container which holds the products, a station for unloading said products which is located below the container, and conveyor means which feed the products from the container to the unloading station along a given unloading path. The apparatus is characterised in that the conveyor means comprise means for intercepting the products and means which drive the intercepting means, imparting to the intercepting means at least a first movement along the unloading path away from the storage container, said first movement being performed in accordance with a given first law of motion and at a given first speed.

The invention is now described with reference to the accompanying drawings, which illustrate a preferred embodiment without limiting the scope of application, and in which:
- Figure 1 is a schematic view with some parts cut away for greater clarity and in a first given operating instant, of an embodiment of the apparatus in accordance with the present invention;
- Figure 2 illustrates the apparatus shown in Figure 1, in a second given operating instant;
- Figure 3 illustrates the apparatus shown in Figure 1, in a third given operating instant;
- Figure 4 illustrates a detail from Figure 3, with some parts in cross-section and other parts cut away for greater clarity;
- Figure 5 is plan view of a detail from Figure 4;
- Figure 6 illustrates the apparatus shown in Figure 1, in a fourth given operating instant.

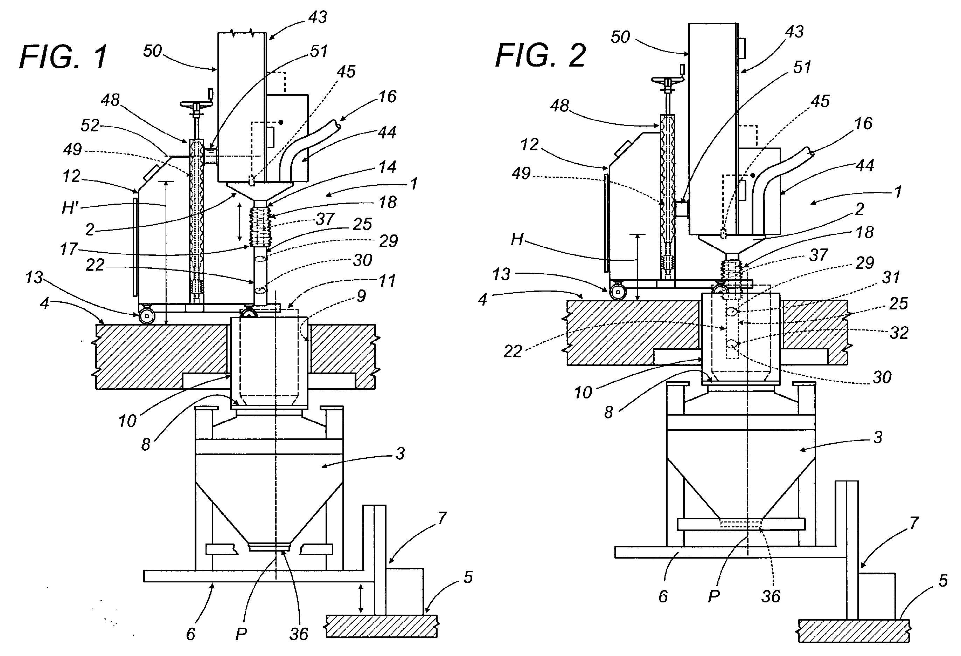

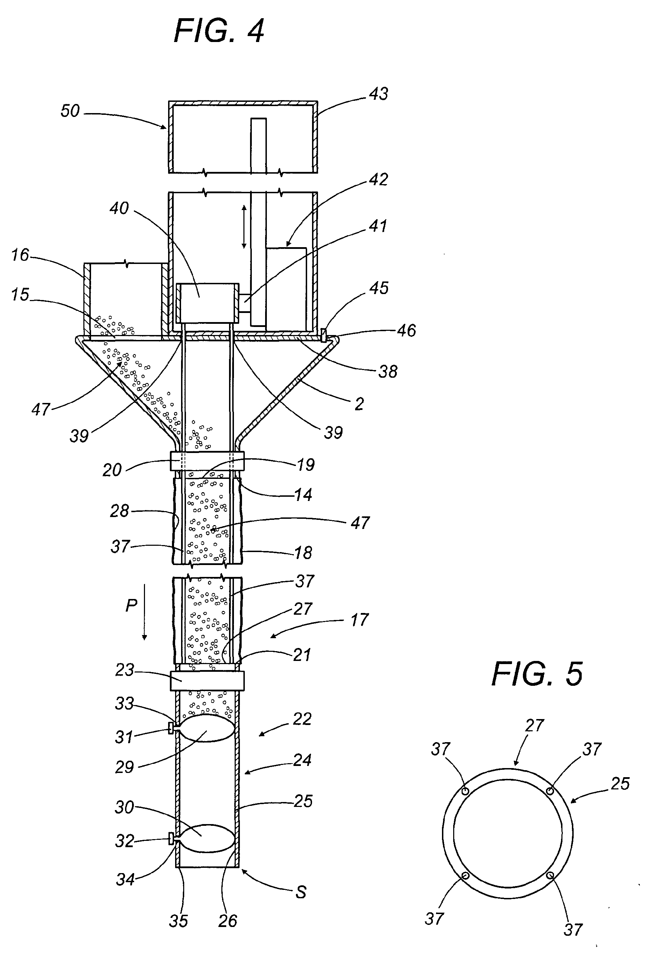

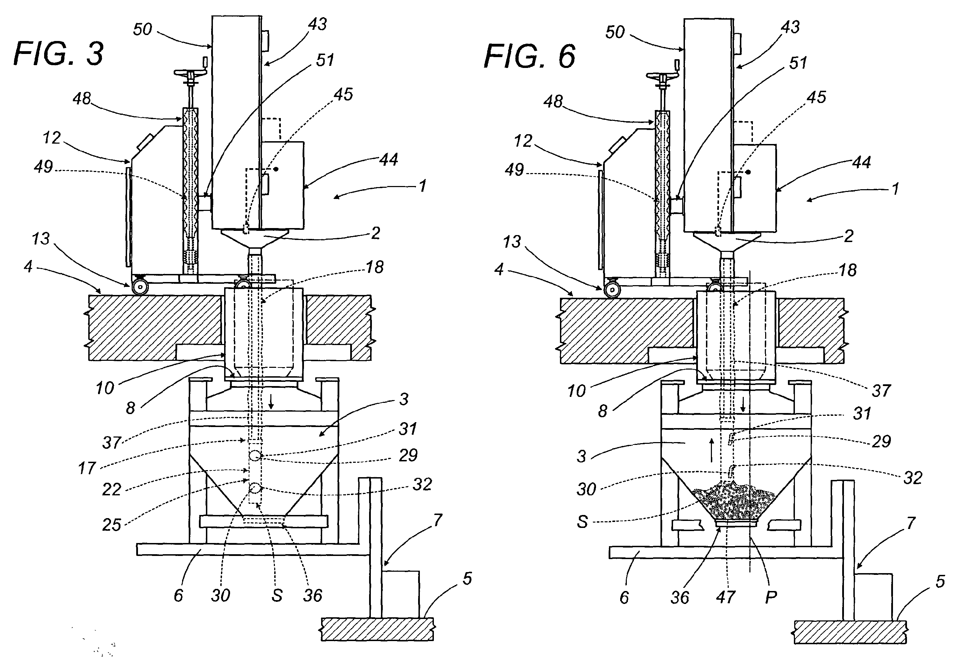

With reference to Figure 1, the numeral 1 denotes as a whole an apparatus for unloading fragile pharmaceutical products 47 (illustrated only in Figures 4 and 6), such as tablets, capsules or similar products, from an upper storage container 2 in the form of a hopper, to a lower collection tank 3. The storage container 2 and tank 3 are normally housed on two adjacent storeys 4 and 5, one upper and one lower, of an industrial building (not illustrated).

The tank 3 is supported by a moving platform 6 of a lifting device 7 of the known type, with which the tank 3 may be positioned at a height from the floor of storey 5 which varies between a lower level (not illustrated) substantially coinciding with that of the floor of storey 5, in which the tank 3 can be connected, for example, to a packaging machine (not illustrated), and an upper level, in which an upper loading opening 8 in the tank 3 is located close to a through-hole 9 between the ceiling of storey 5 and the floor of storey 4.

A throttle valve of the known type, which is not illustrated, may be used to connect the opening 8 to a short feed pipe 10 inserted in the hole 9 and protruding on storey 4, with a loading opening 11 substantially level with the floor of storey 4.

As illustrated in Figure 1, the container 2 is supported at a given height H' from the floor of storey 4 by a mobile load-bearing structure 12 on wheels 13, comprising a supporting device 48 equipped with a mechanical lifter 49 operated by a lead screw and nut mechanism and connected to the storage container 2 by a frame 50 with a pin 51 which has a horizontal axis 52 about which the tank 2 and the frame 50 can turn in order to move the frame 50 and the tank 2 from the vertical position illustrated in Figure 1 to a horizontal position which is not illustrated.

In practice, the tank 2 is positioned with a lower outfeed opening 14 aligned with the loading opening 11 of the pipe 10 and is brought to a given height H by the lifter 49, as illustrated in Figures 2, 3, 4 and 6.

As is more clearly illustrated in Figure 4, on opposite sides of the opening 14, the container 2 has a loading opening 15 connected to an outfeed pipe 16 of a tank or of a feed unit (not illustrated) for the above-mentioned products 47.

The opening 14 is connected to a transfer unit 17 which transfers the products 47 by gravity from the container 2 to the tank 3 along a given unloading path P which is straight and substantially vertical.

The unit 17 comprises a flexible changeable tubular bag 18, made of polyethylene and being able to extend longitudinally along the path P from a gathered position (Figure 1) to an extended position (Figure 3). In particular, the bag 18 is of the disposable type.

The bag 18 has an upper end 19 which is connected in a removable fashion to the container 2, at the opening 14, by means of an O-ring 20 of the known type, and an opposite, lower end 21, which is connected in a removable fashion to a device 22 which intercepts the above-mentioned products, by means of another O-ring 23, identical to the O-ring 20.

The intercepting device 22 is part of the transfer unit 17 and comprises a valve element 24 which, in turn, comprises a cylindrical steel tubular body 25 constituting a relatively short pipe 26 for transferring the products along the path P. In particular, the O-ring 23 connects the lower end 21 of the bag 18 to an upper end 27 of the body 25, so that the pipe 26 formed by the latter is an extension of the pipe 28 formed by the bag 18.

The valve element 24 also comprises a main shutter 29 and a safety shutter 30, the former located above the latter along the path P inside the body 25 and each shutter having a valve element 24 opening configuration and a valve element closing configuration. More specifically, the shutters 29 and 30 each consist of an inflatable silicone balloon, the openings 31, 32 being connected, by means of a through-hole 33, 34 made in the cylindrical side wall of the body 25, to actuator parts (not illustrated) which allow it to pass between the deflated opening configuration, in which the balloon leaves the passage consisting of the pipe 26 free, and an inflated closing configuration, in which the balloon blocks the passage.

The bottom of the body 25 is delimited by an opening 35 forming an unloading station S for the products transferred along the path P, and is mobile in a linear fashion along the path P to vary the height of the station S relative to a lower wall 36 of the tank 3 (Figures 1 - 3).

For this reason, as Figures 4 and 5 more clearly show, the upper base of the end 27 of the body 25 has a plurality of welded motor-driven rods 37 (four in the embodiment illustrated), which extend parallel with the path P, inside the bag 18 and the container 2, exiting a top wall 38 of the container at the through-holes 39 and, on opposite sides of the body 25, connecting to a ring 40 which is, in turn, connected to an output slider 41 of a linear actuator 42 of the known type.

The length of the rods 37 is such that the actuator 42 can impart to the body 25 a linear downstroke movement towards a lower end position (Figure 3), in which the unloading station S is positioned a relatively short distance from the lower wall 36 of the tank 3 when the latter is at its above-mentioned upper level, and a linear upstroke towards an upper end position (Figure 1), in which the body 25 disengages from the pipe 10, allowing maintenance work to be carried out on the transfer unit 17.

The rods 37 also act as retaining elements, designed to hold the bag 18 in a substantially cylindrical tubular configuration when the bag 18 is gathered or extended as it passes between the above-mentioned gathered and extended positions.

The ring 40 and the actuator 42 are housed in a box-shaped body 43, the base of which is supported by the upper wall 38 of the container 2 and which, together with the rods 37, is part of the transfer unit 17.

Finally, the apparatus comprises a control unit 44 for the actuator 42 (Figures 1 - 3). The control unit 44 is supported by the structure 12 and is connected, at infeed, to a sensor 45 located inside a through-hole 46 made in the upper wall 38 of the storage container 2. The sensor 45 detects the quantity of products 47 stored in the storage container 2 and sends a signal to the control unit 44 which, by means of the actuator 42, commands the downstroke and subsequent upstroke of the body 25 along the unloading path P in accordance with the methods indicated in the description of how the apparatus 1 operates.

The control unit 44 also controls the above-mentioned actuator elements (not illustrated) connected to the openings 31 and 32 of the balloons which form the shutters 29 and 30.

Apparatus 1 operation is now described starting with the condition in which the body 25 is at the loading opening 11 of the pipe 10 and in its above-mentioned upper end position, the bag 18 is in the above-mentioned gathered position and completely full of products to be unloaded, and the balloons which form the shutters 29 and 30 are in their closing configuration, blocking the pipe 26 formed by the body 25.

At this point, the control unit 44 issues a command to the actuator 42 to impart to the body 25 and, therefore, to the shutters 29 and 30, a downstroke towards the above-mentioned lower end position. The downstroke is performed with a given first law of motion and at a given first speed.

The downstroke speed and law of motion are determined according to the data supplied by the sensor 45, so that a continuous column of products forms above the shutters 29 and 30. In particular, the first law of motion may be a continuous or an inching movement. In both cases, the function of the sensor 45 is to keep the quantity of products 47 inside the storage container 2 substantially constant.

When the body 25 reaches its lower end position, the column of products substantially extends between the storage container 2 and the unloading station S which is at its lowest level, consisting of the lower opening 35 of the body 25.

The control unit 44 then issues the command for deflation of the above-mentioned balloons, thus starting the unloading operation, during which the products are transferred by gravity along the pipes 28 and 26 formed by the bag 18 and the body 25, as illustrated in Figure 6.

It should be noticed that since, as already indicated, the pipe 26 is relatively short, the distance between the balloons which form the shutters 29 and 30 and the unloading station S is negligible relative to the length of the overall unloading path P. In other words, when the balloons 29 and 30 are deflated, the products reach the lower wall 36 of the container 2 with a relatively contained impact speed, substantially determined by the distance between the unloading station S and the wall 36.

It must also be specified that, in order to reduce the above-mentioned impact speed to a minimum, the control unit 44 commands, in succession, first the deflation of the upper balloon 29, and then the deflation of the lower balloon 30.

During product unloading, depending on the data supplied by the sensor 45, the control unit 44 commands the return upstroke of the body 25, then of the unloading station S, with a given second law of motion and at a given second speed until the tank 3 is completely full.

As specified for the first law of motion, the second law of motion and feed speed may also be continuous or inching.

In an embodiment invention, which is not illustrated, of the apparatus according to the present invention, the lifting device 7 illustrated in Figures 1 to 3 may be absent. In such cases, the rods 37 are, obviously, longer than in the embodiment described above. Again, the length of the rods 37 is such that they allow the actuator 42 to impart to the body 25 a linear downstroke movement towards a lower end position, in which the unloading station S is a relatively short distance from the lower wall 36 of the tank 3, and a linear upstroke movement towards an upper end position, in which the body 25 disengages from the pipe 10, allowing maintenance work to be carried out on the transfer unit 17. In another embodiment which is not illustrated, the load-bearing structure 12 and the collection tank 3 may be mounted on the same storey 4 but, obviously, the storage container 2 is higher than the collection tank 3 and apparatus 1 operation does not differ from that described above.

## Claims

1. A method for unloading fragile products, the method comprising a step of transferring the products along a given unloading path (P), from a storage container (2) to an unloading station (S) located below the storage container (2); the method being characterised in that it comprises at least an initial transfer step, during which the products are intercepted along the path (P) and accompanied with a given law of motion and at a given first speed towards the unloading station (S) until a continuous column of products is formed, substantially extending between the storage container (2) and the unloading station (S).

2. The method according to claim 1, characterised in that the initial transfer step is performed by intercepting means (22), the latter being mobile along the unloading path (P) with the law of motion determined by the given first speed.

3. The method according to claim 2, characterised in that the intercepting means (22) are mobile in a linear fashion along the unloading path (P), the latter being straight and substantially vertical.

4. The method according to claim 3, characterised in that the transfer step is performed by gravity.

5. The method according to any of the claims from 1 to 4, characterised in that the column of products is held and shortened during product unloading; said column being shortened by lifting the unloading station (S) with a given second law of motion and at a given second speed.

6. The method according to any of the foregoing claims from 1 to 5, characterised in that the first and second laws of motion and the first and second speeds are determined according to the quantity of products stored in the storage container.

7. The method according to claim 6, characterised in that the first law of motion is continuous.

8. The method according to claim 6, characterised in that the first law of motion is inching.

9. The method according to claim 6, characterised in that the second law of motion is continuous.

10. The method according to claim 6, characterised in that the second law of motion is inching.

11. An apparatus for unloading fragile products, the apparatus (1) comprising a storage container (2) which holds the products, a station (S) for unloading the products which is located below the container (2), and conveyor means (17) for feeding the products from the container (2) to the unloading station (S) along a given unloading path (P); the apparatus (1) being characterised in that the conveyor means (17) comprise means (22) for intercepting the products and means (37, 42) which drive the intercepting means (22), for imparting to the intercepting means (22) at least a first movement along the unloading path (P) away from the storage container (2), said first movement being performed in accordance with a given first law of motion and at a given first speed.

12. The apparatus according to claim 11, characterised in that the intercepting means (22) are mobile in a linear fashion along the unloading path (P); the unloading path (P) being straight and substantially vertical.

13. The apparatus according to claim 12, characterised in that the conveyor means (17) are designed to feed the products by gravity from the storage container (2) to the unloading station (S) along the given unloading path (P).

14. The apparatus according to any of the foregoing claims from 11 to 13, characterised in that the intercepting means (22) comprise a valve element (24) with at least one shutter (29, 30), having a valve element (24) opening configuration and a valve element closing configuration.

15. The apparatus according to claim 14, characterised in that the shutter element (29, 30) consists of at least one inflatable balloon; the balloon having an inflated, valve element (24) closing configuration and a deflated, opening position.

16. The apparatus according to claim 15, characterised in that the valve element (24) comprises a cylindrical tubular body (25) forming a pipe (26) for transferring the products along the unloading path (P); the balloon obstructing the pipe (26) when it is in its inflated, closing configuration.

17. The apparatus according to claim 15 or 16, characterised in that the balloon is made of silicone.

18. The apparatus according to any of the claims from 11 to 17, characterised in that the conveyor means (17) comprise a tubular bag (18), whose first end (19) may be positioned in such a way that it communicates with an outfeed opening (14) in the container (2) and whose second end (21) may be connected to the intercepting means (22); the tubular bag (18) extending longitudinally along the unloading path (P) from a gathered position to an extended position.

19. The apparatus according to claim 18, characterised in that the first and second ends (19, 21) of the tubular bag (18) may be connected in a removable fashion to the container (2) and, respectively, to the intercepting means (22); the tubular bag (18) being changeable.

20. The apparatus according to claim 19, characterised in that the tubular bag (18) is made of polyethylene.

21. The apparatus according to any of the claims from 18 to 20, characterised in that the drive means (37, 42) comprise a linear actuator (42) and a plurality of drive rods (37); the rods (37) being positioned longitudinally inside the tubular bag (18) and connected to the actuator (42) and the intercepting means (22) in such a way that they impart the given first movement along the unloading path (P) to the intercepting means (22).

22. The apparatus according to claims 16 and 21, characterised in that the drive rods (37) are connected to one end (27) of the cylindrical body (25).

23. The apparatus according to claim 22, characterised in that the cylindrical body (25) has an opening (35) that forms the unloading station (S), the drive means (37, 42) being designed to impart a given second movement towards the storage container (2) to the cylindrical body (25) during product unloading; the second movement being performed in accordance with a given second law of motion and at a given speed.

24. The apparatus according to claim 11, characterised in that it comprises sensor means (45) connected to the storage container (2) in order to detect the quantity of products stored in the storage container (2); and a control unit (44) connected to the sensor means (45), being designed to determine the first law of motion and the first speed.

25. The apparatus according to claim 23, characterised in that it comprises sensor means (45) connected to the storage container (2) in order to detect the quantity of products stored in the storage container (2); and a control unit (44) connected to the sensor means (45), being designed to determine the second law of motion and the second speed.
